# EUROPEAN PATENT APPLICATION

(11) **EP 3 859 680 A1**
(43) Date of publication of application: **04.08.2021**
(21) Application number: 19873100.2
(22) Date of filing: 14.10.2019
(51) Int. Cl.: G06T 11/60, G06F 3/0484

(54) **CONTENT EDITING METHOD AND TERMINAL**

(30) Priority: 16.10.2018 CN 201811202712
(71) Applicant: Huawei Technologies Co., Ltd., Shenzhen Guangdong 518129 (CN)
(72) Inventor: LIU, Lin, Shenzhen, Guangdong 518129 (CN); GAO, Xi, Shenzhen, Guangdong 518129 (CN); HAN, Xiao, Shenzhen, Guangdong 518129 (CN)
(74) Representative: Epping - Hermann - Fischer
(86) International application number: PCT/CN2019/110915
(87) International publication number: WO 2020/078298

(57) **Abstract**

A content editing method and a terminal are provided. The method includes: A terminal displays an editable user interface (901), where the editable user interface displays multimedia content and doodle content, the doodle content is generated in response to an operation performed by a user on the multimedia content, the editable user interface includes a content editing area, and the content editing area is used to add or edit the multimedia content and/or the doodle content. The terminal displays the added or edited doodle content in the content editing area in response to an operation of adding or editing doodle content, or the terminal displays the added or edited multimedia content in the content editing area in response to an operation of adding or editing multimedia content (902). This method helps the user to modify the multimedia content and/or the doodle content, thereby helping improve user experience.

## Description

This application claims priority to Chinese Patent Application No. CN 201811202712.6, filed with the China National Intellectual Property Administration on October 16, 2018 and entitled "CONTENT EDITING METHOD AND TERMINAL", which is incorporated herein by reference in its entirety.

### TECHNICAL FIELD

This application relates to the field of terminal technologies, and in particular, to a content editing method and a terminal.

### BACKGROUND

With advancement of terminal technologies, terminals (for example, a mobile phone and a tablet computer) and the like are widely applied to work and lives of people. A user may record information such as feelings, notes, and plans by using a terminal anytime and anywhere. Therefore, how to enable a user to record information such as a text, a picture, and a doodle more conveniently by using a terminal is of important practical value.

### SUMMARY

Embodiments of this application provide a content editing method and a terminal, to help a user to record information more conveniently by using a terminal, thereby improving user experience.

According to a first aspect, an embodiment of this application provides a content editing method. The method includes: A terminal displays an editable user interface, where the editable user interface displays multimedia content and doodle content, the doodle content is generated in response to an operation performed by a user on the multimedia content, the editable user interface includes a content editing area, and the content editing area is used to add or edit the multimedia content and/or the doodle content. The terminal may display the added or edited doodle content in the content editing area in response to an operation of adding or editing the doodle content. Alternatively, the terminal displays the added or edited multimedia content in the content editing area in response to an operation of adding or editing the multimedia content.

In this embodiment of this application, when the multimedia content and the doodle content are displayed on the editable user interface, the multimedia content or the doodle content can be edited and/or added. Therefore, this helps the user to modify the multimedia content and/or the doodle content, thereby helping to improve user experience.

It should be understood that the multimedia content in this embodiment of this application may be a text, a picture, audio, a video, an animated GIF, or the like.

In some embodiments, the terminal switches between editing of the multimedia content and editing of the doodle content in response to a switching operation of the user. Using the foregoing technical solution helps to simplify an implementation of editing or adding the multimedia content and the doodle content by the user.

In some embodiments, the content editing area includes a first layer and a second layer. The first layer is used to add or edit the multimedia content, and the second layer is used to add or edit the doodle content. After switching the first layer with the second layer in response to a first operation of the user, the terminal displays the added or edited doodle content in the content editing area in response to the operation of adding or editing the doodle content. In this way, the user can doodle in any position at the second layer.

In some embodiments, the editable user interface further includes a function button area. The function button area includes a drawing button, and the first operation is an operation on the drawing button. This helps to simplify an operation manner of the user.

In some embodiments, a size of the second layer is the same as a size of the first layer. In this way, the user can doodle in any position in the content editing area.

In some embodiments, the second layer is transparent. Using the foregoing technical solution helps the user to doodle on the multimedia content.

In some embodiments, the terminal stores the doodle content in response to the operation of adding or editing the doodle content, where the doodle content is stored in a sparse dot matrix manner. This helps to free the doodle content from a limitation of an image size.

In some embodiments, the terminal automatically extends the content editing area by a preset size after detecting that the added doodle content or multimedia content reaches or exceeds a preset position in the content editing area. This helps the user to add the doodle content and/or the multimedia content.

According to a second aspect, an embodiment of this application provides a terminal, a display, one or more processors, a memory, a plurality of application programs, and one or more computer programs. The one or more computer programs are stored in the memory, the one or more computer programs include an instruction, and when the instruction is executed by the terminal, the terminal is enabled to perform the following steps:
displaying an editable user interface, where the editable user interface displays multimedia content and doodle content, the doodle content is generated in response to an operation performed by a user on the multimedia content, the editable user interface includes a content editing area, and the content editing area is used to add or edit the multimedia content and/or the doodle content; and
displaying the added or edited doodle content in the content editing area in response to an operation of adding or editing the doodle content; or
displaying the added or edited multimedia content in the content editing area in response to an operation of adding or editing the multimedia content.

In a possible design, the instruction further includes an instruction to switch between editing of the multimedia content and editing of the doodle content in response to a switching operation of the user.

In a possible design, the content editing area includes a first layer and a second layer; the first layer is used to add or edit the multimedia content, and the second layer is used to add or edit the doodle content; and the instruction further includes:
an instruction to switch the first layer with the second layer in response to a first operation of the user.

In a possible design, the editable user interface further includes a function button area. The function button area includes a drawing button, and the first operation is an operation on the drawing button.

In a possible design, a size of the second layer is the same as a size of the first layer.

In a possible design, the second layer is transparent.

In a possible design, the instruction further includes an instruction to store the doodle content in response to the operation of adding or editing the doodle content, where the doodle content is stored in a sparse dot matrix manner. In a possible design, the instruction further includes an instruction to automatically extend the content editing area by a preset size after it is detected that the added doodle content or multimedia content reaches or exceeds a preset position in the content editing area.

According to a third aspect, an embodiment of this application provides a chip. The chip is coupled to a memory in a terminal, so that the chip invokes, during running, a computer program stored in the memory, to implement the method according to any one of the first aspect or the possible designs provided in the first aspect of the embodiments of this application.

According to a fourth aspect, an embodiment of this application provides a computer storage medium. The computer storage medium stores a computer program. When the computer program is run on a terminal, the terminal is enabled to perform the method according to any one of the first aspect or the possible designs of the first aspect.

According to a fifth aspect, an embodiment of this application provides a computer program product. When the computer program product is run on a terminal, the terminal is enabled to perform the method according to any one of the first aspect or the possible designs of the first aspect.

In addition, for technical effects brought by any possible design manner of the second aspect to the fifth aspect, refer to technical effects brought by different design manners of the first aspect. Details are not described herein again.

### BRIEF DESCRIPTION OF DRAWINGS

FIG. 1 is a schematic diagram of a hardware structure of a terminal according to an embodiment of this application;
FIG. 2A to FIG. 2D are a schematic diagram of user interfaces according to an embodiment of this application;
FIG. 3 is a schematic diagram of a position relationship between a first layer and a second layer according to an embodiment of this application;
FIG. 4A and FIG. 4B are a schematic diagram of user interfaces according to another embodiment of this application;
FIG. 5 is a schematic diagram of a layer according to another embodiment of this application;
FIG. 6 is a schematic diagram of a storage format of doodle content according to an embodiment of this application;
FIG. 7 is a schematic diagram of extension of a content editing area according to an embodiment of this application;
FIG. 8A and FIG. 8B are a schematic diagram of user interfaces according to another embodiment of this application;
FIG. 9 is a schematic flowchart of a content editing method according to an embodiment of this application;
FIG. 10 is a schematic structural diagram of a terminal according to an embodiment of this application; and
FIG. 11 is a schematic structural diagram of a terminal according to another embodiment of this application.

### DESCRIPTION OF EMBODIMENTS

It should be understood that, in embodiments of this application, "at least one" means one or more, and "a plurality of' means two or more. The term "and/or" describes an association relationship between associated objects, and indicates that three relationships may exist. For example, A and/or B may represent the following three relationships: Only A exists, both A and B exist, and only B exists. Each of A and B may be singular or plural. The character "/" generally indicates an "or" relationship between associated objects, and "at least one of the following (items)" or a similar expression thereof means any combination of these items, including a single item (item) or any combination of a plurality of items (items). For example, at least one of a, b, or c may represent: a; b; c; a and b; a and c; b and c; or a, b, and c, where a, b, and c each may be singular or may be plural.

It should be understood that the embodiments of this application may be applied to a terminal. In the embodiments of this application, the terminal may be a portable terminal, such as a mobile phone, a tablet computer, a wearable device with a wireless communication function (for example, a smartwatch), or a vehicle-mounted device. An example embodiment of the portable terminal includes but is not limited to a portable terminal with iOS®, Android®, Microsoft®, or another operating system. Alternatively, the portable terminal may be, for example, a laptop computer (Laptop) with a touch-sensitive surface (for example, a touch panel). It should be further understood that, in some other embodiments of this application, a terminal 100 may alternatively be a desktop computer with a touch-sensitive surface (for example, a touch panel).

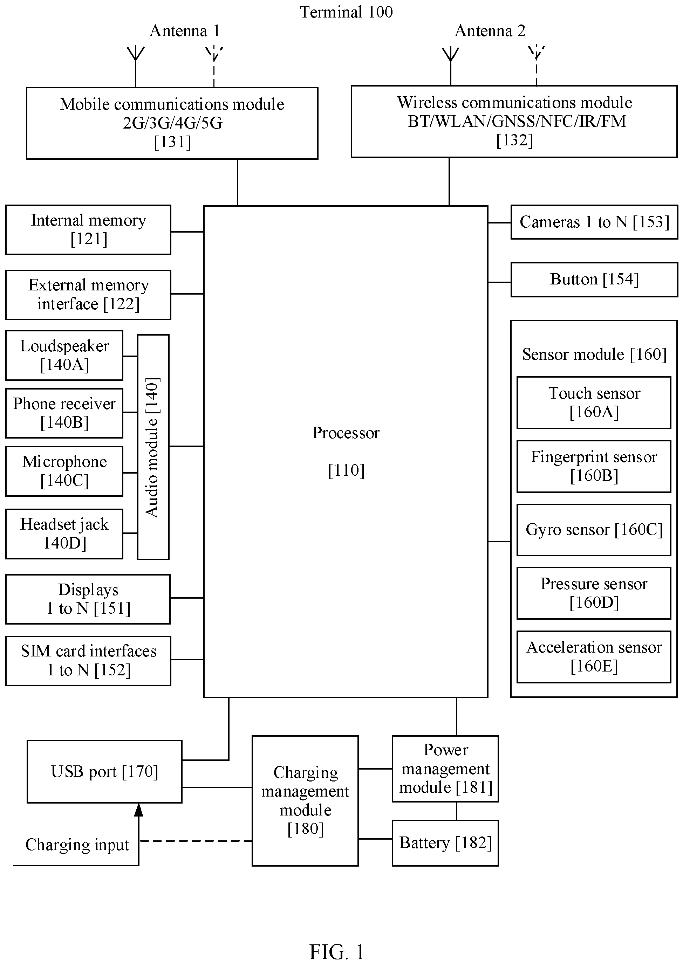

FIG. 1 is a schematic diagram of a hardware structure of a terminal according to an embodiment of this application. Specifically, the terminal 100 may include a processor 110, an internal memory 121, an external memory interface 122, an antenna 1, a mobile communications module 131, an antenna 2, a wireless communications module 132, an audio module 140, a loudspeaker 140A, a phone receiver 140B, a microphone 140C, a headset jack 140D, a display 151, a subscriber identification module (subscriber identification module, SIM) card interface 152, a camera 153, a button 154, a sensor module 160, a universal serial bus (universal serial bus, USB) port 170, a charging management module 180, a power management module 181, and a battery 182. In some other embodiments, the terminal 100 may further include a motor, an indicator, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processor (neural-network processing unit, NPU). Different processing units may be independent components, or may be integrated into one or more processors.

In some embodiments, a memory may be further disposed in the processor 110, to store an instruction and data. For example, the memory in the processor 110 may be a cache memory. The memory may store an instruction or data that is just used or cyclically used by the processor 110. If the processor 110 needs to use the instruction or the data again, the processor 110 may directly invoke the instruction or the data from the memory. This avoids repeated access, and reduces a waiting time of the processor 110, thereby improving system efficiency.

The internal memory 121 may be configured to store computer executable program code, and the executable program code includes an instruction. The processor 110 runs the instruction stored in the internal memory 121, to implement various function applications and data processing of the terminal 100. The internal memory 121 may include a program storage area and a data storage area. The program storage area may store an operating system, an application program required by at least one function (for example, a sound playback function and an image playback function), and the like. The data storage area may store data (such as audio data, a phone book, and a memo) created during use of the terminal 100, or the like. In addition, the internal memory 121 may include a high-speed random access memory, and may further include a non-volatile memory, for example, at least one magnetic disk storage device, a flash memory device, or a universal flash storage (universal flash storage, UFS).

The external memory interface 122 may be configured to connect to an external memory card (for example, a micro SD card), to extend a storage capacity of the terminal 100. The external memory card communicates with the processor 110 through the external memory interface 122, to implement a data storage function, for example, storing a file such as a music file or a video file in the external memory card.

The antenna 1 and the antenna 2 are configured to transmit and receive electromagnetic wave signals. Each antenna in the terminal 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 131 may provide a solution for wireless communication including 2G, 3G, 4G, 5G, and the like, applied to the terminal 100. The mobile communications module 131 may include at least one filter, a switch, a power amplifier, a low noise amplifier (low noise amplifier, LNA), and the like. The mobile communications module 131 may receive an electromagnetic wave signal by using the antenna 1, perform processing such as filtering and amplification on the received electromagnetic wave signal, and transmit the processed electromagnetic wave signal to the modem processor for demodulation. The mobile communications module 131 may further amplify a signal modulated by the modem processor, and the amplified signal is converted into an electromagnetic wave signal for radiation by using the antenna 1. In some embodiments, at least some of function modules of the mobile communications module 131 may be disposed in the processor 110. In some embodiments, at least some of function modules of the mobile communications module 131 may be disposed in a same component as at least some of modules of the processor 110.

The modem processor may include a modulator and a demodulator. The modulator is configured to modulate a to-be-sent low-frequency baseband signal into a medium-to-high-frequency signal. The demodulator is configured to demodulate a received electromagnetic wave signal into a low-frequency baseband signal. Then, the demodulator transfers the low-frequency baseband signal obtained through demodulation, to the baseband processor for processing. The low-frequency baseband signal is transferred to the application processor after being processed by the baseband processor. The application processor outputs a sound signal by using an audio device (not limited to the loudspeaker 140A, the phone receiver 140B, and the like), or displays an image or a video by using the display 151. In some embodiments, the modem processor may be an independent component. In some other embodiments, the modem processor may be independent of the processor 110, and be disposed in a same component as the mobile communications module 131 or another function module.

The wireless communications module 132 may provide wireless communication solutions including a wireless local area network (wireless local area networks, WLAN) (for example, a Wi-Fi network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology, applied to the terminal 100. The wireless communications module 132 may be one or more components integrating at least one communications processor module. The wireless communications module 132 receives an electromagnetic wave signal by using the antenna 2, performs frequency modulation and filtering processing on the electromagnetic wave signal, and sends the processed signal to the processor 110. The wireless communications module 132 may further receive a to-be-sent signal from the processor 110, perform frequency modulation and amplification on the signal, and convert the frequency-modulated and amplified signal into an electromagnetic wave signal for radiation by using the antenna 2.

In some embodiments, the antenna 1 and the mobile communications module 131 are coupled, and the antenna 2 and the wireless communications module 132 are coupled, so that the terminal 100 can communicate with a network and another device by using a wireless communications technology. The wireless communications technology may include, for example, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, and/or an IR technology. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS), or the like.

The terminal 100 may use the audio module 140, the loudspeaker 140A, the phone receiver 140B, the microphone 140C, the headset jack 140D, the application processor, and the like to implement an audio function, for example, music playback and sound recording.

The audio module 140 may be configured to convert digital audio information into an analog audio signal for output, and is also configured to convert an analog audio input into a digital audio signal. The audio module 140 may be further configured to encode and decode audio signals. In some embodiments, the audio module 140 may be disposed in the processor 110, or some of function modules of the audio module 140 are disposed in the processor 110.

The loudspeaker 140A, also referred to as a "speaker", is configured to convert an audio electrical signal into a sound signal. The terminal 100 may be used for listening to music or answering a hands-free call by using the loudspeaker 140A.

The phone receiver 140B, also referred to as an "earpiece", is configured to convert an audio electrical signal into a sound signal. When a call is being answered or a voice message is being listened to by using the terminal 100, the phone receiver 140B may be placed close to a human ear to listen to a voice.

The microphone 140C is configured to convert a sound signal into an electrical signal. When making a call or sending a voice message, a user may make a sound by placing a mouth close to the microphone 140C. The microphone 140C may be configured to collect a voice of the user, and then convert the voice of the user into an electrical signal. The terminal 100 may have at least one microphone 140C. In some other embodiments, the terminal 100 may have two microphones 140C, to collect a sound signal and further implement a noise reduction function. In some other embodiments, the terminal 100 may alternatively have three, four, or more microphones 140C, to collect a sound signal, reduce noise, identify a sound source, implement a directional recording function, and the like.

The headset jack 140D is configured to connect to a wired headset. The headset jack 140D may be the USB port 130, or may be a 3.5 mm open mobile terminal platform (open mobile terminal platform, OMTP) standard interface, a cellular telecommunications industry association (cellular telecommunications industry association of the USA, CTIA) standard interface, or the like.

The terminal 100 implements a display function by using the GPU, the display 151, the application processor, and the like. The GPU is a microprocessor for image processing, and is connected to the display 151 and the application processor. The GPU is configured to perform mathematical and geometric calculation, and is used for graphics rendering. The processor 110 may include one or more GPUs that execute a program instruction to generate or change display information.

The display 151 may be configured to display an image, a video, and the like. The display 151 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini LED, a micro LED, a micro-OLED, a quantum dot light emitting diode (quantum dot light emitting diodes, QLED), or the like. In some embodiments, the terminal 100 may include one or N displays 151, where N is a positive integer greater than 1.

The terminal 100 may implement a shooting function by using the ISP, the camera 153, the video codec, the GPU, the display 151, the application processor, and the like.

The ISP may be configured to process data fed back by the camera 153. For example, during photographing, a shutter is opened, light is transferred to a photosensitive element of the camera through a lens, an optical signal is converted into an electrical signal, and the photosensitive element of the camera transfers the electrical signal to the ISP for processing, so that the electrical signal is converted into an image visible to a naked eye. The ISP may further perform algorithm optimization on an image noise, luminance, and complexion. The ISP may further optimize parameters such as an exposure and a color temperature of a shooting scenario. In some embodiments, the ISP may be disposed in the camera 193.

The camera 153 may be configured to capture a static image or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format such as RGB or YUV In some embodiments, the terminal 100 may include one or N cameras 153, where N is a positive integer greater than 1.

The button 154 may include a power button, a volume button, and the like. The button 154 may be a mechanical button, or may be a touch button. The terminal 100 may receive a button input, and generate a button signal input related to a user setting and function control of the terminal 100.

The sensor module 160 may include one or more sensors, for example, a touch sensor 160A, a fingerprint sensor 160B, a gyro sensor 160C, a pressure sensor 160D, and an acceleration sensor 160E. In some embodiments, the sensor module 160 may further include an environmental sensor, a distance sensor, an optical proximity sensor, a bone conduction sensor, and the like.

The touch sensor 160A may also be referred to as a "touch panel". The touch sensor 160A may be disposed in the display 151, and the touch sensor 160A and the display 151 constitute a touchscreen, which may also be referred to as a "touch control screen". The touch sensor 160A is configured to detect a touch operation on or near the touch sensor 160A. The touch sensor 160A may transfer the detected touch operation to the application processor to determine a touch event type. Then, the terminal 100 may provide, by using the display 151, a visual output related to the touch operation, or provide, by using the loudspeaker 140A, an auditory output related to the touch operation. In some other embodiments, the touch sensor 160A may be alternatively disposed on a surface of the terminal 100, at a position different from that of the display 151.

The fingerprint sensor 160 may be configured to collect a fingerprint. The terminal 100 may use a collected fingerprint feature to implement fingerprint unlock, application access lock, fingerprint-based photographing, fingerprint-based call answering, and the like.

The gyro sensor 160C may be configured to determine a motion posture of the terminal 100. In some embodiments, an angular velocity of the terminal 100 around three axes (namely, x, y, and z axes) may be determined by using the gyro sensor 160C. The gyro sensor 160C may be used for image stabilization during shooting. For example, when a shutter is pressed, the gyro sensor 160C detects a shaking angle of the electronic device 100, calculates, based on the angle, a distance for which a lens module needs to compensate, and allows the lens to cancel shaking of the terminal 100 through reverse motion, to implement image stabilization. The gyro sensor 160C may be further used for scenarios such as navigation and a motion sensing game.

The pressure sensor 160D is configured to sense a pressure signal, and can convert the pressure signal into an electrical signal. In some embodiments, the pressure sensor 160D may be disposed in the display 151. There are many types of pressure sensors 160D, for example, a resistive pressure sensor, an inductive pressure sensor, and a capacitive pressure sensor. The capacitive pressure sensor may include at least two parallel plates with conductive materials. When a force is applied to the pressure sensor 180A, capacitance between electrodes changes. The terminal 100 determines pressure intensity based on a capacitance change. When a touch operation is performed on the display 194, the terminal 100 detects strength of the touch operation by using the pressure sensor 180A. The terminal 100 may also calculate a touch position based on a detection signal of the pressure sensor 180A. In some embodiments, touch operations that are applied to a same touch position but have different touch operation strength may correspond to different operation instructions. For example, when a touch operation whose touch operation strength is less than a first pressure threshold is applied to an application icon of notes, an instruction to view a note is executed; when a touch operation whose touch operation strength is greater than or equal to a first pressure threshold is applied to an application icon of notes, an instruction to create a new note is executed.

The acceleration sensor 160E may detect magnitudes of accelerations of the terminal 100 in various directions (generally on three axes), and may detect a magnitude and direction of gravity when the terminal 100 is static. The acceleration sensor 160E may be further configured to identify a posture of the terminal 100, and may also be applied to applications such as switching between a landscape mode and a portrait mode, and a pedometer.

In some other embodiments, the processor 110 may further include one or more interfaces. For example, the interface may be the SIM card interface 152. For another example, the interface may be the USB port 170. For still another example, the interface may alternatively be an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), or a general-purpose input/output (general-purpose input/output, GPIO) interface. It can be understood that, in this embodiment of this application, different modules of the terminal 100 may be connected through an interface, so that the terminal 100 can implement different functions, for example, photographing and processing. It should be noted that a connection manner of the interface in the terminal 100 is not limited in this embodiment of this application.

The SIM card interface 152 may be configured to connect to a SIM card. The SIM card may be inserted into the SIM card interface 152 or removed from the SIM card interface 152, to come into contact with or be separated from the terminal 100. The terminal 100 may support one or N SIM card interfaces, where N is a positive integer greater than 1. The SIM card interface 152 may support a nano-SIM card, a micro-SIM card, a SIM card, and the like. A plurality of cards may be inserted into the same SIM card interface 152 at the same time. The plurality of cards may be of a same type or different types. The SIM card interface 152 may also be compatible with different types of SIM cards. The SIM card interface 152 may also be compatible with an external memory card. The terminal 100 interacts with a network by using a SIM card, to implement functions such as calling and data communication. In some embodiments, the terminal 100 may use an eSIM, namely, an embedded SIM card. The eSIM card may be embedded in the terminal 100, and cannot be separated from the terminal 100.

The USB port 170 is an interface that complies with a USB standard specification. For example, the USB port 170 may include a mini USB port, a micro USB port, a USB type C port, and the like. The USB port 170 may be configured to connect to a charger to charge the terminal 100, and may also be used for data transmission between the terminal 100 and a peripheral device. The USB port 170 may also be configured to connect to a headset, to play an audio by using the headset. The USB port 170 may also be configured to connect to another terminal, for example, an augmented reality (augmented reality, AR) device.

The charging management module 180 is configured to receive a charging input from a charger. The charger may be a wireless charger, or may be a wired charger. In some embodiments of wired charging, the charging management module 180 may receive a charging input of the wired charger through the USB port 170. In some embodiments of wireless charging, the charging management module 180 may receive a wireless charging input by using a wireless charging coil of the terminal 100. When the charging management module 180 is charging the battery 182, power may be further supplied to the terminal 100 by using the power management module 181.

The power management module 181 is configured to connect the battery 182, the charging management module 180, and the processor 110. The power management module 181 receives an input from the battery 182 and/or the charging management module 180, and supplies power to the processor 110, the internal memory 121, an external memory, the display 151, the camera 153, the mobile communications module 131, the wireless communications module 132, and the like. The power management module 181 may be further configured to monitor parameters such as a battery capacity, a quantity of battery cycles, and a battery health status (leakage and impedance). In some other embodiments, the power management module 181 may be alternatively disposed in the processor 110. In some other embodiments, the power management module 181 and the charging management module 180 may be alternatively disposed in a same component.

It should be understood that the hardware structure of the terminal 100 shown in FIG. 1 is merely an example. The terminal 100 in this embodiment of this application may have more or fewer components than those shown in the figure, may combine two or more components, or may have a different component configuration. Various components shown in the figure may be implemented in hardware including one or more signal processing and/or application-specific integrated circuits, software, or a combination of hardware and software.

In addition, it should be understood that the terminal 100 in this embodiment of this application may implement different functions by installing different applications. The application may be a native (native) application, for example, settings, phone, or camera, or may be a third-party application downloaded from an application store, for example, WeChat.

The following describes in detail a content editing method provided in an embodiment of this application, with reference to the terminal 100 shown in FIG. 1.

In this embodiment of this application, the terminal 100 may add or edit multimedia content (for example, a text or a picture) and/or doodle content on an editable user interface, so that a user can conveniently modify or add the multimedia content and the doodle content. This helps to improve user experience.

It should be noted that the content editing method in this embodiment of this application may be applied to an application with a multimedia content recording function. The multimedia content in this embodiment of this application may include a text, audio, a video, a picture, an animated GIF, and the like. The application with the multimedia content recording function may be notes, or may be files or the like. The following describes in detail the content editing method provided in this embodiment of this application, by using notes as an example. When the method provided in this embodiment of this application is applied to another application, an implementation of the method is similar to that of applying the method to notes. Details are not described herein.

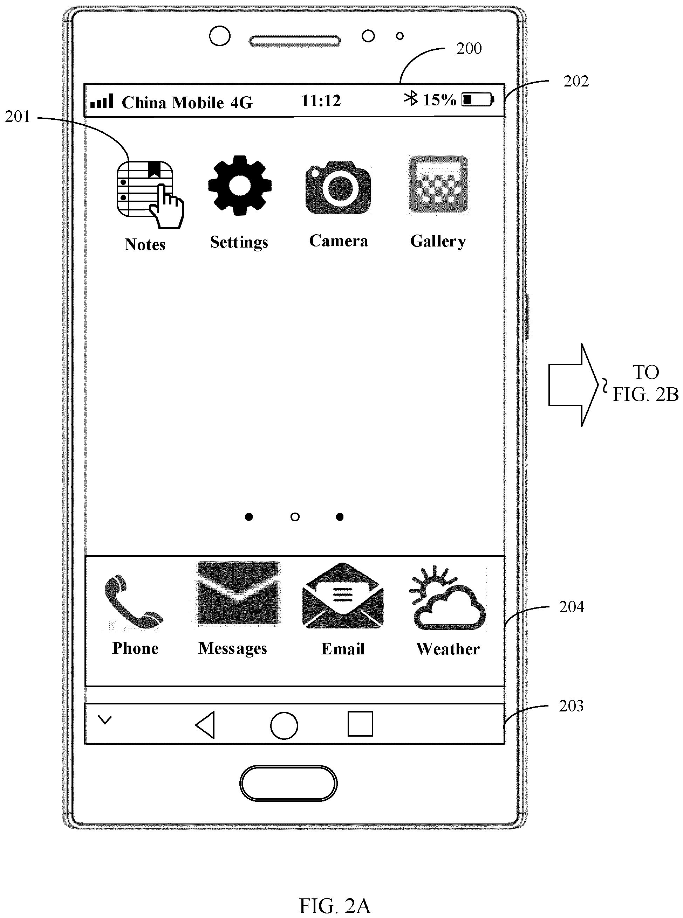

The display 151 of the terminal 100 displays a home screen, and the home screen includes a notes icon. For example, the home screen may be a user interface 200 shown in FIG. 2A. The user interface 200 includes a notes icon 201. In addition, the user interface 200 may further include an icon of another application, for example, a settings icon, a camera icon, or a gallery icon. In some embodiments, the user interface 200 may further include a status bar 202, a navigation bar 203 that can be hidden, and a dock bar 204. The status bar 202 may include a name of an operator (for example, China Mobile), a mobile network (for example, 4G), a Bluetooth icon, time, and remaining battery power. In addition, it may be understood that, in some other embodiments, the status bar 202 may further include a Wi-Fi icon, an external-device icon, and the like. The navigation bar 203 may include a back button (back button), a home button (home button), and a history task view button (menu button). The dock bar may include frequently used application icons, such as a phone icon, a messages icon, an email icon, and a weather icon. It should be noted that the application icon in the dock bar may be correspondingly set based on a requirement of the user.

The terminal 100 displays the user interface 210 on the display 151 in response to an operation on the notes icon 201. For example, the user interface 210 may include a note creating button 211. In some other embodiments, when the terminal 100 has saved a note, the user interface 210 may further include a saved-note list 212. In some other embodiments, the user interface 210 may further include a search box 213. The terminal 100 may respond to a keyword entered by the user in the search box 213, so that the display 151 displays a note that is in the saved-note list 212 and that includes the keyword, thereby helping to improve efficiency of searching the saved-note list 212 for a note by the user.

It should be noted that the operation on the notes icon 201 may be a touch operation performed by the user on the notes icon 201, or may be another operation, for example, an operation such as a touch and hold operation or a heavy pressing operation. For example, the terminal 100 may detect the operation on the notes icon 201 by using the touch sensor 160A. In addition, in this embodiment of this application, the terminal 100 may further display the user interface 210 on the display 151 in response to another operation (for example, a voice instruction or a shortcut gesture operation of "opening notes").

For example, the operation on the notes icon 201 is a touch operation on the notes icon 201. The terminal 100 may respond to the operation on the notes icon 201 in the following manner: After the touch sensor 160A of the terminal 100 detects the operation on the notes icon 201, a touch event is sent to the processor 110 (for example, the application processor). After receiving the touch event, the processor 110 determines that a type of the touch event is an operation of opening the notes, and then notifies the display 151 to display the user interface 210.

The terminal 100 may display the editable user interface on the display 151 in response to an operation on the note creating button 211 or a saved note in the note list 212. In addition, the terminal 100 may alternatively display the editable user interface on the display 151 in response to another operation (for example, a shortcut gesture operation, a voice instruction to create a note, or a voice instruction to open a saved note).

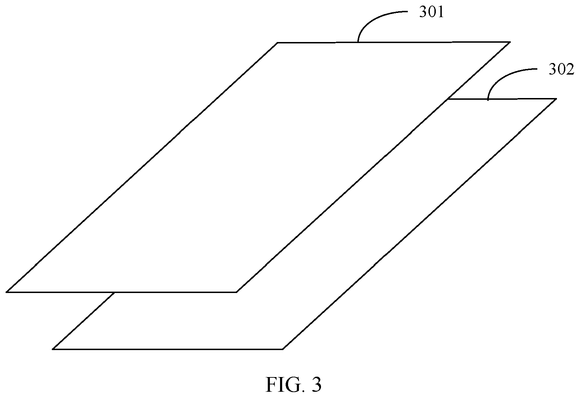

The editable user interface includes a content editing area. The content editing area may display the multimedia content and/or the doodle content. The terminal 100 may display the added or edited doodle content in the content editing area in response to an operation of adding or editing the multimedia content. Alternatively, the terminal 100 displays the added or edited multimedia content in the content editing area in response to an operation of adding or editing the multimedia content. In this embodiment of this application, the doodle content may be generated in response to an operation performed by the user on the multimedia content. In some embodiments, the content editing area includes a first layer and a second layer. The first layer is used to add or edit the multimedia content, and the second layer is used to add or edit the doodle content. This helps to simplify a manner of generating the doodle content in response to the operation performed by the user on the multimedia content. For example, a location relationship between the first layer and the second layer may be shown in FIG. 3. Using that a layer 301 is the first layer and a layer 302 is the second layer as an example, when the layer 301 covers the layer 302, the terminal 100 may display the added or edited multimedia content in the content editing area in response to the operation of adding and/or editing the multimedia content; when the layer 302 covers the layer 301, the terminal 100 may display the added or edited doodle content in the content editing area in response to the operation of adding and/or editing the doodle content. The terminal 100 may switch the layer 301 with the layer 302 in response to an operation of the user, to add and/or edit the multimedia content or the doodle content.

The operation of editing the doodle content may be an operation such as deleting the doodle content, changing a color of the doodle content, or changing a thickness of a line of the doodle content. In this embodiment of this application, the operation of adding the multimedia content may include an operation of adding a text, a picture, a video, audio, or the like, and the operation of editing the multimedia content may include an operation of deleting the multimedia content, replacing the multimedia content, copying the multimedia content, pasting the multimedia content, or the like. For example, the terminal 100 displays the editable user interface on the display 151 in response to an operation on the note creating button 211. Because the display 151 displays the editable user interface in response to the note creating button, before the user performs an operation of adding the multimedia content and/or the doodle content on the editable user interface, the content editing area may be blank, or may automatically display a time at which a note is created.

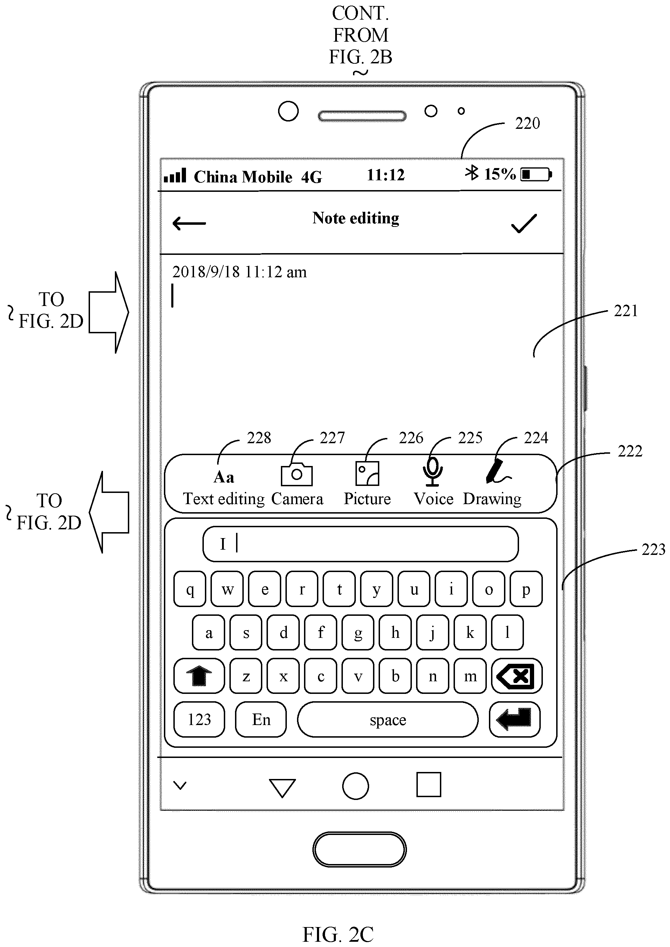

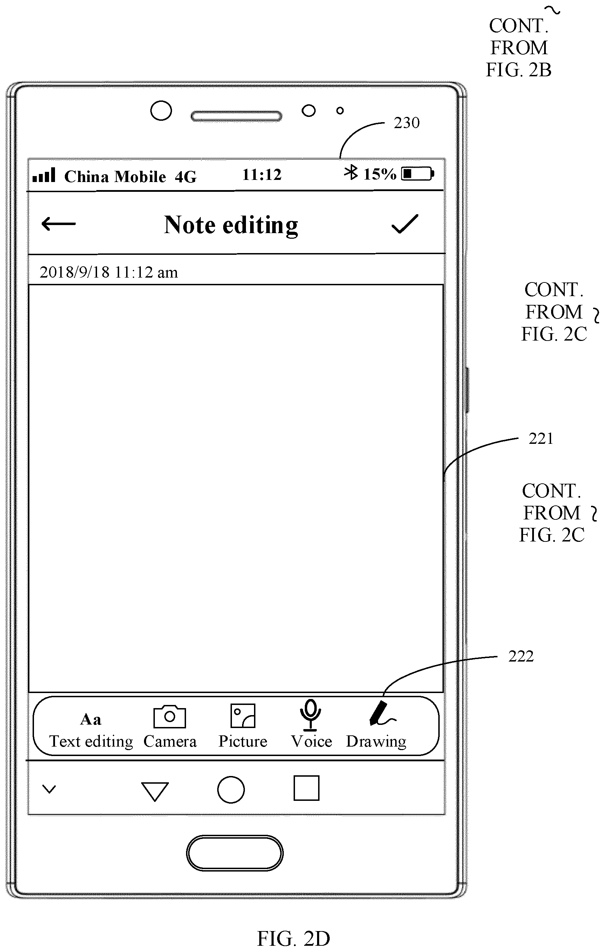

In some embodiments, in response to the operation on the note creating button 211, the editable user interface displayed on the display 151 may be a user interface 220 shown in FIG. 2C. In some other embodiments, in response to the operation on the note creating button 211, the editable user interface displayed on the display 151 may be a user interface 230 shown in FIG. 2D. The user interface 220 includes a content editing area 221. The content editing area 221 includes a first layer and a second layer. The terminal 100 may make the first layer cover the second layer in response to a touch operation on any position in the content editing area 221. In addition, the terminal may further display a virtual keyboard on the user interface 230 in response to a touch operation on any position in the content editing area 221. A user interface obtained by displaying the virtual keyboard on the user interface 230 may be the user interface 220 shown in FIG. 2C. In some embodiments, the terminal 100 may hide the virtual keyboard 223 in response to a pull-down operation or the like on the user interface 220.

The user interface 220 includes the content editing area 221 and the virtual keyboard 223, and the first layer covers the second layer in the content editing area 221. The terminal 100 may display an added corresponding text in the content editing area 221 in response to an operation of adding the text by the user by using the virtual keyboard 223. It should be noted that the terminal 100 adds the text on the first layer. In some embodiments, the terminal 100 may further display an added picture, video, audio, or the like in the content editing area 221 in response to an operation of the user. For example, the terminal 100 may add a picture, a video, audio, or the like on the first layer. For example, the user interface 220 further includes a function bar 222. The function bar 222 includes at least one of a camera button 227, a picture button 226, and a voice button 225. This helps the user to add a picture, audio, a video, and the like. It should be noted that the function bar 222 may be hidden, or may not be hidden.

The terminal 100 may open a gallery in response to an operation on the picture button 226, and display, on the display 151, a photo, a video, and the like that are saved in the gallery. The terminal 100 responds to an operation of selecting one or more pictures in the gallery, and displays, in the content editing area 223, the selected one or more pictures in the gallery. The terminal 100 may turn on a camera in response to an operation on the camera button 227, and display a shooting interface of the camera on the display 151. After detecting that shooting is completed, the terminal 100 may display, in the content editing area 221, a photo, a video, or the like shot by using the camera. The terminal 100 may collect, in response to an operation on the voice button 225, a sound in an external environment (for example, a sound made by the user) by using the microphone 140C or another sound collection device, and display, in the content editing area after the collection is completed, a voice collected by using the microphone 140C. In some embodiments, the function bar 222 may further include a text editing button 228. The terminal 100 may edit, in response to an operation on the text editing button 228, a format of a text displayed in the content editing area 221. This helps the user to adjust the format of the text displayed in the content editing area 221.

It should be noted that the terminal may switch the first layer with the second layer in response to a first operation. In some embodiments, the first operation may be a shortcut gesture operation, for example, a three-finger slide-up operation or a two-finger slide-down operation, or may be a voice instruction or the like. In some other embodiments, the function bar 222 further includes a drawing button 224. The first operation may be an operation on the drawing button 224. It should be noted that the drawing button in this embodiment of this application may also be referred to as a doodle button, or may have another name. This is not limited. The drawing button is used as an example. For example, the terminal 100 switches the first layer with the second layer in response to the operation on the drawing button 224 included in the user interface 220, so that the second layer covers the first layer. In this way, the terminal 100 can display the added or edited doodle content in the content editing area 221 in response to the operation of adding or editing the doodle content. In some embodiments, a size of the second layer is the same as a size of the first layer. Because the second layer covers the first layer, the user may doodle in any position in the content editing area 221, so that the user can annotate or mark the multimedia content added on the first layer. It should be noted that a size of the first layer may alternatively be different from a size of the second layer. For example, when the size of the first layer is different from the size of the second layer, the size of the second layer in this embodiment of this application may be a size of an area in which the multimedia content is located. In this case, a size of the content editing area is the size of the first layer. In some other embodiments, the second layer is transparent. In this embodiment of this application, the first layer may be transparent, or may be non-transparent. This is not limited. This helps the terminal 100 to display the multimedia content and the doodle content.

In addition, in some embodiments, the terminal 100 may further display a drawing toolbar in response to an operation on the drawing button 224 included in the user interface 220. For example, a doodle toolbar in the drawing toolbar 441 includes at least one of a pen-type and color selection button, an erasing button, a typing cancelation button, a typing restoration button, and a closing button. A button included in the drawing toolbar is not limited in this embodiment of this application. In this way, the user can doodle based on different requirements of the user. For example, in response to an operation on the pen-type and color selection button, the terminal 100 may display, on the display 151, various types of pens (for example, a pencil and a brush, where types of lines drawn by different pens are different) and colors (for example, red and yellow) used for doodling. The user may perform selection from various pens and colors that are displayed on the display 151 and that are used for doodling. For example, if the user selects a red color and a brush, when the user doodles on the terminal 100, a color in doodle content is red, and a line type in the doodle content is a line type corresponding to the brush. For another example, the terminal 100 may erase, in response to an operation on the erasing button, doodle content that is in a position selected by the user. The terminal 100 may cancel, in response to an operation on the typing cancelation button, doodle content that is last entered. The terminal 100 may restore last canceled doodle content in response to an operation on the typing restoration button. The terminal 100 may hide the doodle toolbar 411 in response to an operation on the closing button 417.

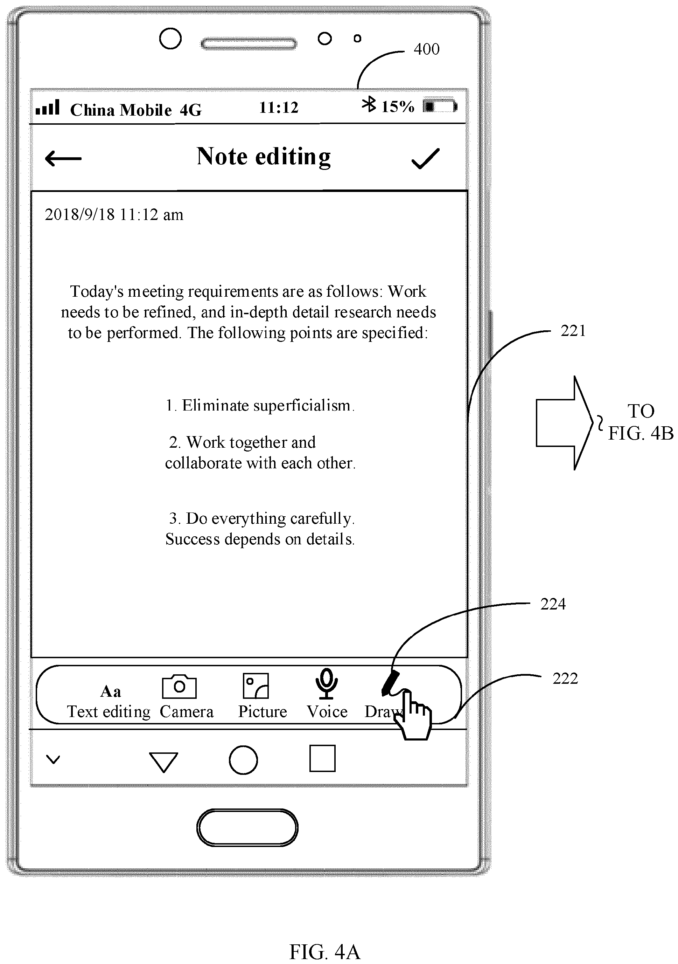

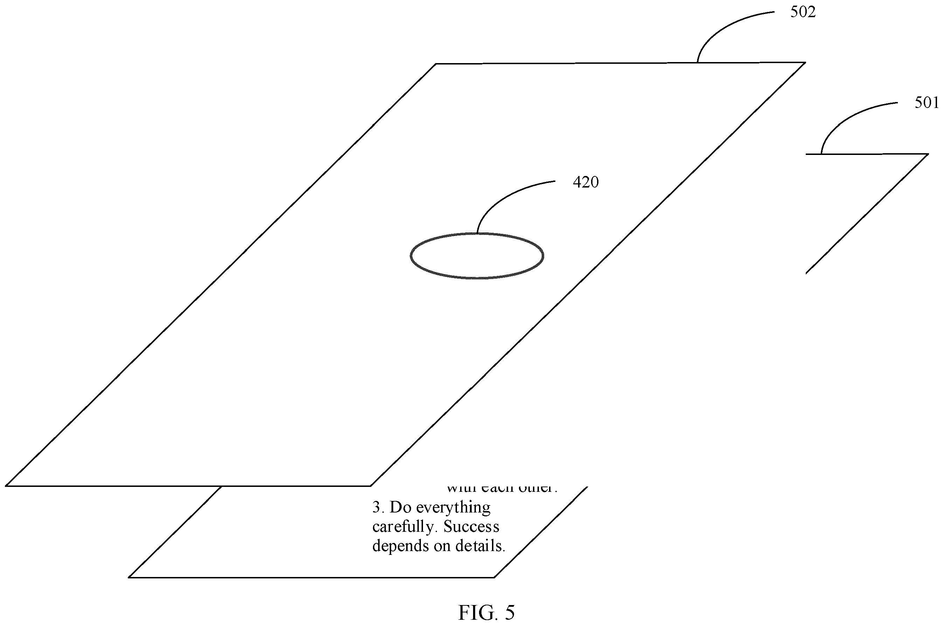

For example, when the multimedia content added by the user on the first layer is "Today's meeting requirements are as follows: Work needs to be refined, and in-depth detail research needs to be performed. The following points are specified: 1. Eliminate superficialism. 2. Work together and collaborate with each other. 3. Do everything carefully. Success depends on details", a user interface displayed on the terminal 100 may be a user interface 400 shown in FIG. 4A. The user interface 400 includes a content editing area 221 and a function bar 222. The content editing area 221 displays the added multimedia content: "Today's meeting requirements are as follows: Work needs to be refined, and in-depth detail research needs to be performed. The following points are specified: 1. Eliminate superficialism. 2. Work together and collaborate with each other. 3. Do everything carefully. Success depends on details". The function bar 223 includes a drawing button 224. In response to an operation on the drawing button 224 included in the user interface 220, the terminal 100 switches a first layer with a second layer, and displays a drawing toolbar 411. For example, the terminal 100 displays a user interface 410 in response to an operation of adding doodle content 420 by the user. The user interface 410 includes a content editing area 221 and the drawing toolbar 411. The content editing area 221 displays the doodle content 420. For example, the user interface 410 may further include a function bar 222. For example, as shown in FIG. 5, the first layer is a layer 501, the second layer is a layer 502, the layer 502 includes added multimedia content, and the layer 501 includes the added doodle content 420. The content editing area 221 displays overlaying of the multimedia content added on the layer 520 and the doodle content 420 added on the layer 501.

It should be noted that the user may add or edit the doodle content in any position on the layer 502.

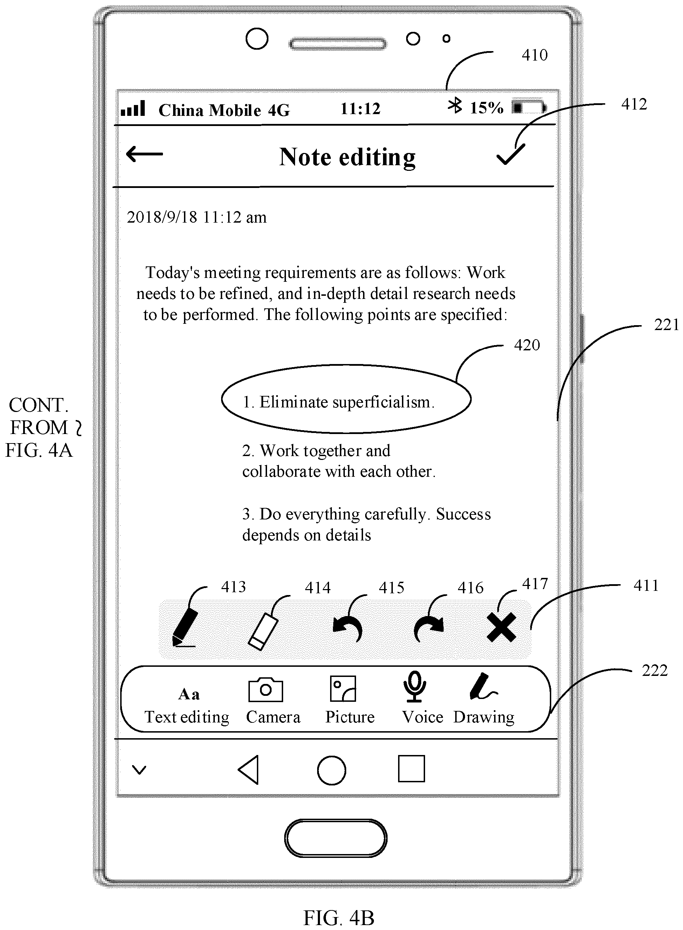

In this embodiment of this application, as shown in FIG. 4B, when completing an operation of adding or editing the doodle content, the user may save the doodle content 420 by performing an operation on a completion button 412. In some embodiments, the terminal 100 may further display the multimedia content and the doodle content in the content editing area 221 in response to the operation on the completion button 412. For ease of viewing a note by the user, in some embodiments, when the display 151 displays the multimedia content and the doodle content, the second layer covers the first layer. After saving the doodle content 420, if the terminal 100 detects an operation of the user on the content editing area 221, the terminal 100 may switch the first layer with the second layer again, so that the first layer covers the second layer, and the user can perform an operation on the multimedia content in the content editing area again.

It should be noted that, in this embodiment of this application, switching may be performed between editing or adding the multimedia content and editing or adding the doodle content. Specifically, the switching may be performed in response to an operation of the user. For example, switching from editing or adding the multimedia content to editing or adding the doodle content is performed in response to an operation of the user on the drawing button. For another example, switching from editing or adding the doodle content to editing or adding the multimedia content is performed in response to an operation of completing the doodle content by the user.

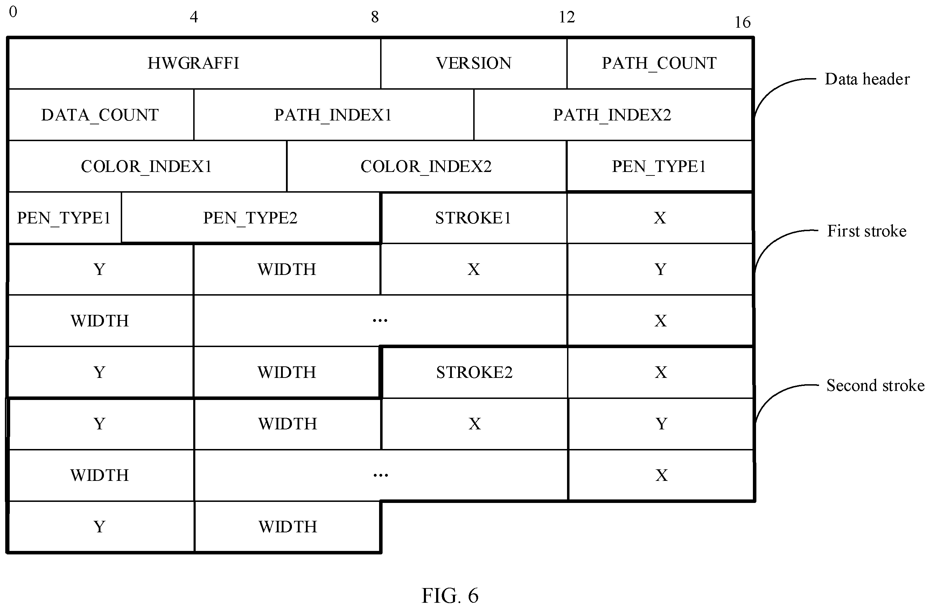

To help the terminal 100 to save the doodle content, and make the terminal 100 be not limited by an image display size of the doodle content, in this embodiment of this application, the doodle content may be stored by using a sparse dot matrix method. For example, if the doodle content 420 shown in FIG. 4B is completed by the user by entering two strokes, a schematic diagram of a format when the doodle content 420 is stored by using a sparse dot matrix may be shown in FIG. 6. Specifically, as shown in FIG. 6, when the terminal 100 stores the doodle content 420 in a sparse dot matrix manner, a data header, a first stroke, and a second stroke are included. The data header includes an identifier (for example, HWGRAFFI, where the identifier of the doodle content 420 may be determined according to a preset rule) of the doodle content 420, a note version number (VERSION), a total quantity of strokes (PATH_COUNT) included in the doodle content 420, a data length (DATA_COUNT) of the doodle content 420, an identifier (PATH_INDEX1) used to prompt to save a start position of the first stroke, an identifier (PATH_INDEX2) used to prompt to save a start position of the second stroke, a color index (COLOR_INDEX 1) used for the first stroke, a color index (COLOR_INDEX2) used for the second stroke, a pen type index (PEN_INDEX1) used for the first stroke, and a pen type index (PEN_INDEX2) used for the second stroke. The first stroke includes a type identifier (STROKE1) of the first stroke, to indicate a line type used for the first stroke, and coordinates (X, Y) and a width (WIDTH) of each point included in the first stroke. The second stroke includes a type identifier (STROKE2) of the second stroke, to indicate a line type used for the second stroke, and coordinates (X, Y) and a width (WIDTH) of each point included in the second stroke.

It should be noted that the terminal 100 saves multimedia content and/or doodle content displayed in a same content editing area into a same file. The user interface 410 shown in FIG. 4B is used as an example. The multimedia content "Today's meeting requirements are as follows: Work needs to be refined, and in-depth detail research needs to be performed. The following points are specified: 1. Eliminate superficialism. 2. Work together and collaborate with each other. 3. Do everything carefully. Success depends on details" and the doodle content 420 are saved in a same file. In this embodiment of this application, when the second layer covers the first layer in the content editing area 221, the terminal 100 may further automatically extend the content editing area by a preset size if detecting that a position of the doodle content entered by the user reaches a preset position in the content editing area (for example, the doodle content entered by the user is 400 pixels away from a bottom of the content editing area). For example, when the second layer covers the first layer in the content editing area, the terminal 100 may further automatically extend the content editing area by the preset size if detecting, by using the processor 100 (for example, the application processor), that the position of the doodle content entered by the user reaches the preset position in the content editing area.

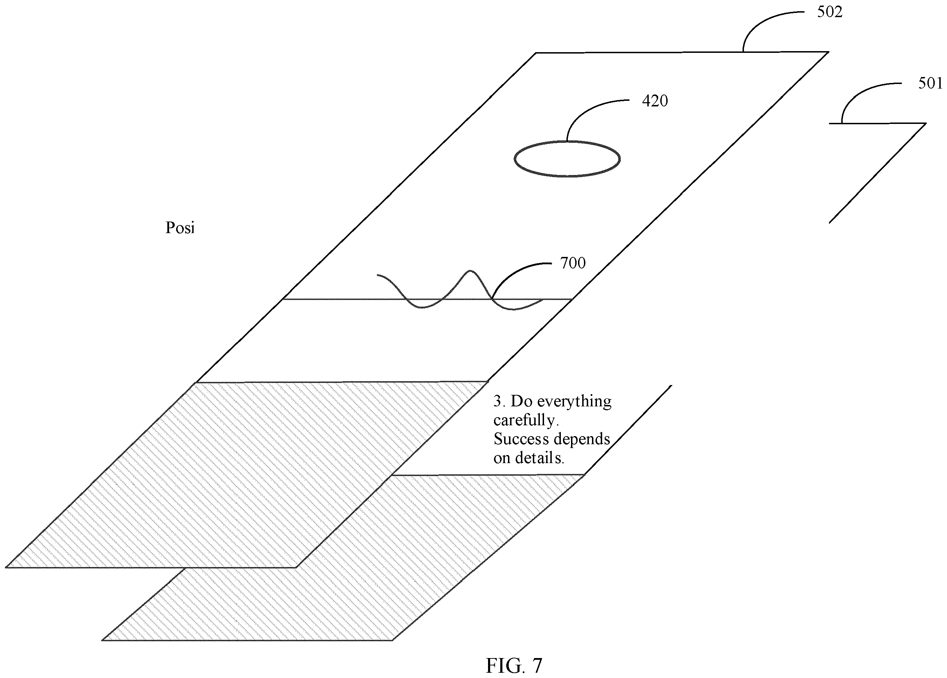

It should be noted that, in this embodiment of this application, the automatically extending the content editing area by the preset size means automatically extending the second layer and the first layer by the preset size at the same time. For example, when the display 151 of the terminal 100 displays the user interface 410 shown in FIG. 4B, after it is detected that the user doodles to a position A in a process of adding, at the second layer 502, doodle content 700 shown in FIG. 7, the second layer and the first layer automatically extend downward by the preset size. Shaded parts in FIG. 7 are extension parts of the first layer and the second layer. The preset size may be set depending on a requirement. Usually, the preset size may be set to a size of an initial content editing area. It should be understood that, when the terminal 100 responds to the operation on the note creating button 211, a size of the content editing area included in the user interface displayed on the display 151 is the size of the initial content editing area. In addition, usually, because storage space of the terminal 100 is limited, to avoid unlimited extension of the content editing area, after detecting that the position of the doodle content entered by the user reaches the preset position in the content editing area, the terminal 100 may automatically extend the content editing area downward by the preset size if it is determined that a current size of the content editing area does not exceed a maximum limit. When the current size of the content editing area reaches the maximum limit, the terminal 100 no longer extends the content editing area downward.

It should be noted that, in this embodiment of this application, when the first layer covers the second layer, the terminal 100 may also automatically extend a size of the content editing area when detecting that the multimedia information added by the user exceeds the current size of the content editing area. For a manner of automatically extending the size of the content editing area, refer to the foregoing manner of automatically extending the size of the content editing area. Details are not described herein again.

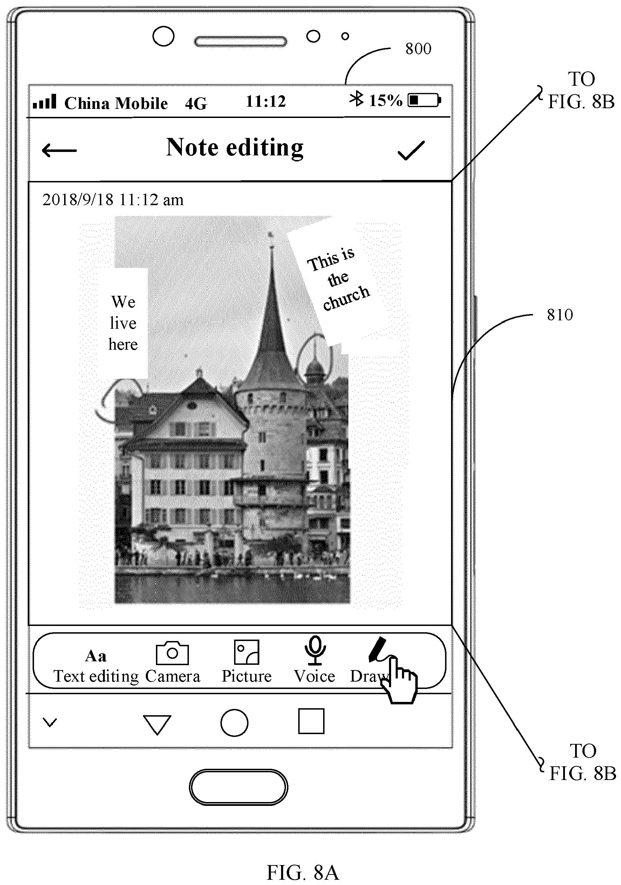

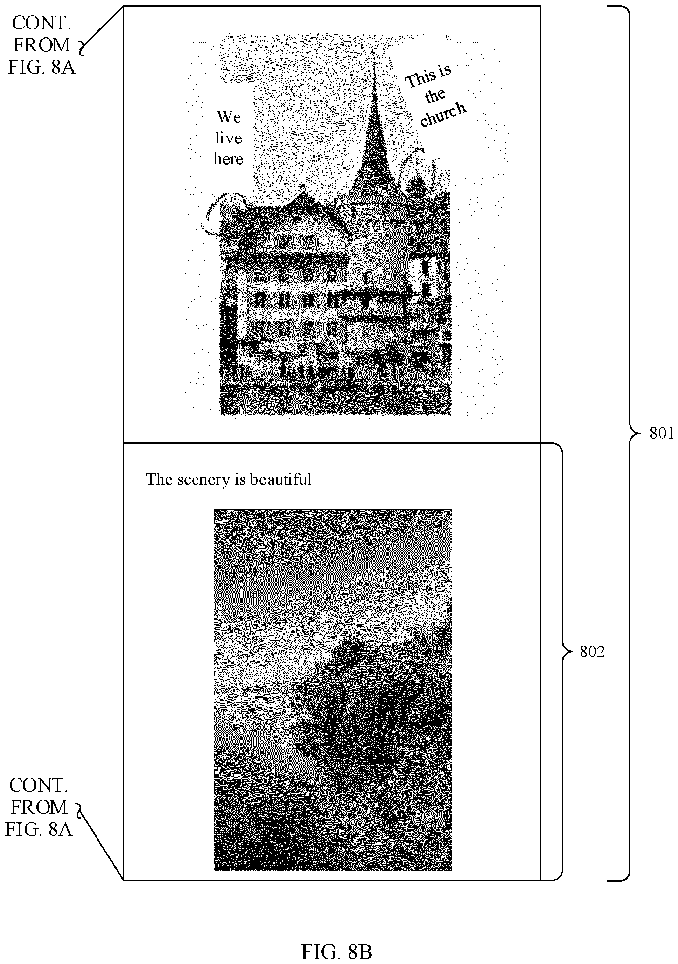

For example, as shown in FIG. 8A, the display 151 of the terminal 100 displays a user interface 800. The user interface 800 includes a content editing area 801, and an area 802 is an extension area of an initial content editing area. The terminal 100 may respond to a slide-up or slide-down operation of the user in an area 810 of the display 151, so that the display 151 displays content that is in a corresponding position in the corresponding content editing area 801.

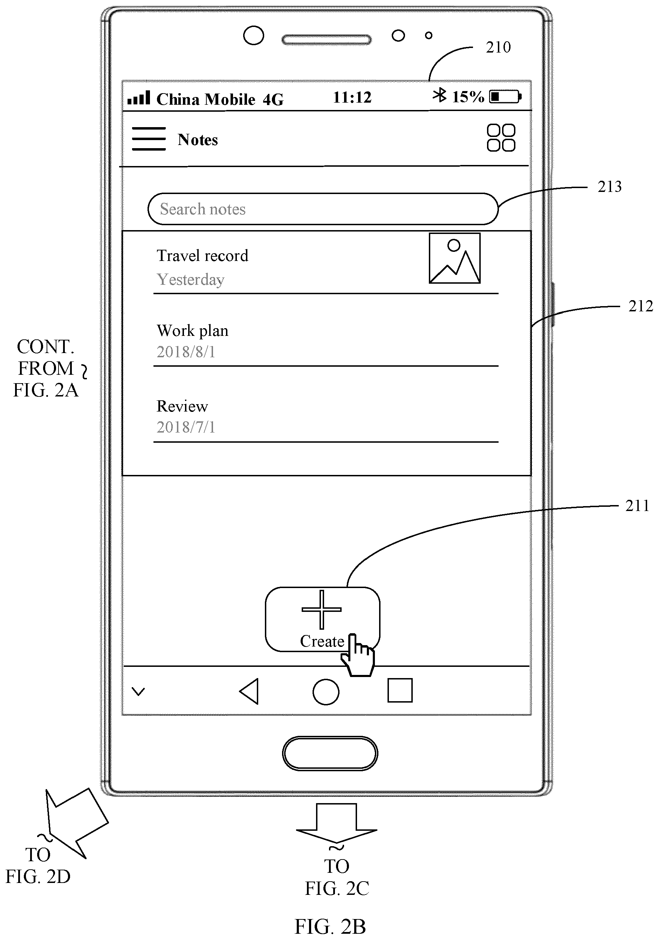

It should be further noted that, using the user interface 210 shown in FIG. 2B as an example, in this embodiment of this application, the terminal 100 may further display a user interface of a selected note on the display 151 in response to an operation of selecting the note in the saved-note list 212 by the user. The terminal may correspondingly edit and/or add the multimedia content or the doodle content on the user interface of the selected note in response to an operation of the user. A specific manner of adding or editing the doodle content and the multimedia content is similar to a manner of adding or editing the doodle content and the multimedia content in a newly created note, and details are not described herein again.

The embodiments of this application may be used in combination with each other, or may be used separately.

With reference to the foregoing embodiments and the accompanying drawings, an embodiment of this application provides a content editing method. The method may be implemented in the terminal 100 having the hardware structure shown in FIG. 1.

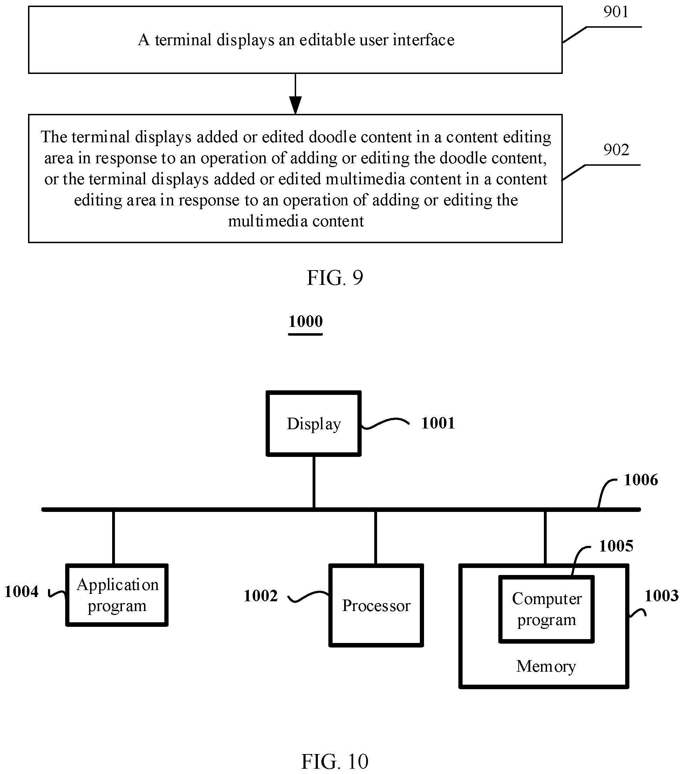

FIG. 9 is a schematic flowchart of the content editing method according to this embodiment of this application. The method includes the following steps:
Step 901: A terminal displays an editable user interface, where the editable user interface displays multimedia content and doodle content, the doodle content is generated in response to an operation performed by a user on the multimedia content, the editable user interface includes a content editing area, and the content editing area is used to add or edit the multimedia content and/or the doodle content.
Step 902: The terminal displays the added or edited doodle content in the content editing area in response to an operation of adding or editing the doodle content, or the terminal displays the added or edited multimedia content in the content editing area in response to an operation of adding or editing the multimedia content.

For a specific implementation of the method shown in FIG. 9 in this embodiment of this application, refer to the descriptions of the foregoing related embodiments.

In the foregoing embodiments provided in this application, the method provided in the embodiments of this application is described from a perspective of the terminal serving as an execution body. To implement functions in the method provided in the embodiments of this application, the terminal may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on specific applications and design constraints of the technical solutions.

As shown in FIG. 10, an embodiment of this application discloses a terminal 1000. The terminal 1000 may include a display 1001, one or more processors 1002, a memory 1003, a plurality of application programs 1004, and one or more computer programs 1005. The foregoing components may be connected through one or more communications buses 1006. The one or more computer programs 1005 include an instruction, and the instruction is stored in the memory 1003 and configured to be executed by the one or more processors 1002, to implement the content editing method provided in the embodiments of this application.

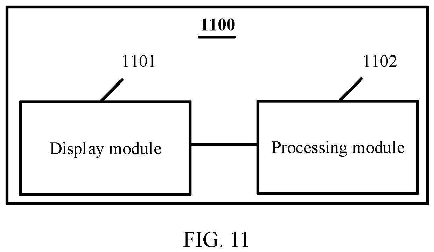

Based on a same concept, FIG. 11 shows a terminal 1100 according to this application. The terminal 1100 includes a display module 1101 and a processing module 1102. The display module 1101 may be configured to perform step 901 in the content editing method shown in FIG. 9. The processing module 1102 is configured to perform the operation of adding or editing the doodle content or the multimedia content in step 902 in the content editing method shown in FIG. 9, so that the display module 1101 performs corresponding display.

The processor in the foregoing embodiments may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in the embodiments of this application. The general purpose processor may be a microprocessor, or the processor may be any conventional processor or the like. Steps of the method disclosed with reference to the embodiments of this application may be directly executed and accomplished by a hardware decoding processor, or may be executed and accomplished by a combination of hardware in a decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads an instruction in the memory to complete the steps of the foregoing method in combination with hardware of the processor.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A skilled person may use a different method to implement the described functions for each specific application.

It may be clearly understood by a person skilled in the art that, for ease and brevity of description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into units is merely logical function division, and may be other division in actual implementation. For example, a plurality of units or components may be combined, or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each unit may exist alone physically, or two or more units may be integrated into one unit.

When the functions are implemented in a form of a software function unit and sold or used as an independent product, the functions may be stored in a computer readable storage medium. Based on such an understanding, the technical solutions of this application essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method described in the embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A content editing method, wherein the method comprises:
displaying, by a terminal, an editable user interface, wherein the editable user interface displays multimedia content and doodle content, the doodle content is generated in response to an operation performed by a user on the multimedia content, the editable user interface comprises a content editing area, and the content editing area is used to add or edit the multimedia content and/or the doodle content; and
displaying, by the terminal, the added or edited doodle content in the content editing area in response to an operation of adding or editing the doodle content; or
displaying, by the terminal, the added or edited multimedia content in the content editing area in response to an operation of adding or editing the multimedia content.

2. The method according to claim 1, wherein the method further comprises:
switching, by the terminal, between editing of the multimedia content and editing of the doodle content in response to a switching operation of the user.

3. The method according to claim 1 or 2, wherein the content editing area comprises a first layer and a second layer, the first layer is used to add or edit the multimedia content, and the second layer is used to add or edit the doodle content; and
before displaying, by the terminal, the added or edited doodle content in the content editing area in response to the operation of adding or editing the doodle content, the method further comprises:
switching, by the terminal, the first layer with the second layer in response to a first operation of the user.

4. The method according to claim 3, wherein the editable user interface further comprises a function button area, the function button area comprises a drawing button, and the first operation is an operation on the drawing button.

5. The method according to claim 3 or 4, wherein a size of the second layer is the same as a size of the first layer.

6. The method according to any one of claims 3 to 5, wherein the second layer is transparent.

7. The method according to any one of claims 1 to 6, wherein the method further comprises:
storing, by the terminal, the doodle content in response to the operation of adding or editing the doodle content, wherein the doodle content is stored in a sparse dot matrix manner.

8. The method according to any one of claims 1 to 7, wherein the method further comprises:
automatically extending, by the terminal, the content editing area by a preset size after detecting that the added doodle content or multimedia content reaches or exceeds a preset position in the content editing area.

9. A terminal, comprising: a display, one or more processors, and a memory, wherein the processor is connected to the display and the memory through a bus;
a plurality of application programs; and
one or more computer programs, wherein the one or more computer programs are stored in the memory, the one or more computer programs comprise an instruction, and when the instruction is executed by the terminal, the terminal device is enabled to perform the following steps:
displaying an editable user interface, wherein the editable user interface displays multimedia content and doodle content, the doodle content is generated in response to an operation performed by a user on the multimedia content, the editable user interface comprises a content editing area, and the content editing area is used to add or edit the multimedia content and/or the doodle content; and
displaying the added or edited doodle content in the content editing area in response to an operation of adding or editing the doodle content; or
displaying the added or edited multimedia content in the content editing area in response to an operation of adding or editing the multimedia content.

10. The terminal according to claim 9, wherein the instruction further comprises:
switching between editing of the multimedia content and editing of the doodle content in response to a switching operation of the user.

11. The terminal according to claim 9 or 10, wherein the content editing area comprises a first layer and a second layer, the first layer is used to add or edit the multimedia content, the second layer is used to add or edit the doodle content, and the instruction further comprises:
an instruction to switch the first layer with the second layer in response to a first operation of the user.

12. The terminal according to claim 11, wherein the editable user interface further comprises a function button area, the function button area comprises a drawing button, and the first operation is an operation on the drawing button.

13. The terminal according to claim 11 or 12, wherein a size of the second layer is the same as a size of the first layer.

14. The terminal according to any one of claims 11 to 13, wherein the second layer is transparent.

15. The terminal according to any one of claims 9 to 14, wherein the instruction further comprises:
an instruction to store the doodle content in response to the operation of adding or editing the doodle content, wherein the doodle content is stored in a sparse dot matrix manner.

16. The terminal according to any one of claims 9 to 15, wherein the instruction further comprises:
an instruction to automatically extend the content editing area by a preset size after it is detected that the added doodle content or multimedia content reaches or exceeds a preset position in the content editing area.

17. A chip, wherein the chip is coupled to a memory in a terminal, so that when running, the chip invokes a computer program stored in the memory, to implement the method according to any one of claims 1 to 8.

18. A computer storage medium, wherein the computer readable storage medium comprises a computer program, and when the computer program is run on a terminal, the terminal is enabled to perform the method according to any one of claims 1 to 8.
